# EUROPEAN PATENT SPECIFICATION

(11) **EP 1 453 166 B1**
(45) Date of publication and mention of the grant of the patent: **11.05.2011**
(21) Application number: 04004188.1
(22) Date of filing: 25.02.2004
(51) Int. Cl.: H02G 3/04, H02G 3/12

(54) **Holding element for preventing electric apparatus from being disengaged from cable channels**
Halteelement zur Vermeidung des Herausspringens eines elektrischen Gerät aus einem Kabelkanal
Element de maintien pour prévenir le découplage d'un appareil électrique d'un chemin de câble

(30) Priority: 26.02.2003 IT MI20030085
(43) Date of publication of application: 01.09.2004
(73) Proprietor: COMELTI S.R.L., 20037 Paderno Dugnano MI (IT)
(72) Inventor: Villi, Piiergiorgio, 20037 Paderno Dugnano, Milano (IT)
(74) Representative: Cicogna, Franco

(56) References cited:
- EP-A- 0 844 714
- EP-A- 0 932 233
- WO-A-02/37633

## Description

### BACKGROUND OF THE INVENTION

The present invention relates to a holding element for preventing electric apparatus from being disengaged from harness channels.

Harness channels, made of plastic materials and designed for receiving electric consumer or user apparatus or "electric fruits", telephonic consumer apparatus and other harness assemblies, are already known.

More specifically, the above mentioned harness channels, comprising a plastic material extruded C-body, define a central channel arrangement for housing therein electric user apparatus, which central channel comprises a plurality of hook elements thereagainst tooth elements formed on the electric user apparatus engage.

A lot of electric user or consumer apparatus comprise their tooth elements so made as not to define an abutment plane toward the withdrawal direction of the electric consumer or user apparatus from the channel.

Thus, it could happen that, in disconnecting plugs from receptacles, the related consumer apparatus would be withdrawn or removed from the harness channel.

In order to solve the above mentioned problem, means have already been designed for preventing electric consumer apparatus from being accidentally disengaged from the harness channels; however, prior approaches have not been found as satisfactory, since they are very expensive and can be properly located exclusively by a very complex locating process.

Another drawback of prior art approaches is that the above mentioned elements are made of a plastic material which can be easily broken, since it is not suitable for properly resisting against the applied efforts. See EP 0 932 233 for instance.

### SUMMARY OF THE INVENTION

Accordingly, the aim of the present invention is to overcome the above disclosed drawbacks, by providing a holding element for preventing electric consumer apparatus from being detached or disengaged from harness channels, which is so designed as to safely prevent any spreading apart of the harness channel hook elements, even under great forces.

Within the scope of the above mentioned aim, a main object of the present invention is to provide such a holding element which is perfectly adapted to prevent electric consumer apparatus from being detached from their harness channel arrangements.

Another object of the present invention is to provide such a holding element which, while having a very reduced size, allows a lot of electric consumer apparatus to be arranged adjoining with one another without generating dead spaces therebetween.

Another object of the present invention is to provide such a holding element which, owing to its specifically designed constructional features, is very reliable and safe in operation.

Yet another object of the present invention is to provide such a holding element which can be easily made starting from easily available elements and materials and which, moreover, is very competitive from a mere economic standpoint.

According to one aspect of the present invention, the above mentioned aim and objects, as well as yet other objects, which will become more apparent hereinafter, are achieved by a holding element for preventing electric consumer or user apparatus from being disengaged from harness channels, characterized in that said holding element comprises a plate body which can be arranged on a side of the electric consumer apparatus to be held, and having, at an end portion thereof, a plurality of tooth elements engageable with a corresponding plurality of hook elements defined by said harness channel for latching said electric consumer apparatus, abutment fins extending from said plate body and engageable under said hook elements being moreover provided.

### BRIEF DESCRIPTION OF THE DRAWINGS

Further characteristics and advantages of the present invention will become more apparent hereinafter from the following detailed disclosure of a holding element, specifically designed for preventing electric consumer apparatus from being disengaged from harness channels, which is shown, by way of an indicative, but not limitative, example in the accompanying drawings, where:
Figure 1 is a front view of the holding element according to the present invention, applied to a harness channel shown in cross section;
Figure 2 is a perspective view illustrating an operating step for arranging the holding element according to the invention on a harness channel;
Figure 3 shows a further operating step in which the holding element is introduced into the harness channel;
Figure 4 is a schematic perspective view illustrating two electric consumer apparatus arranged in an adjoining relationship and being held at a set position by respective holding elements according to the present invention;
Figure 5 is a side perspective view illustrating the holding element according to the invention; and
Figure 6 is a further perspective view, taken from the other side, also showing the holding element.

### DESCRIPTION OF THE PREFERRED EMBODIMENTS

With reference to the number references of the above mentioned figures, the holding element designed for preventing electric consumer apparatus from being disengaged from respective harness channels, according to the present invention, which has been generally indicated by the reference number 1, comprises a plate body 2, which is preferably made of a sheet metal material, which is suitably bent or folded.

To the plate body 2 a bent edge 3 is coupled, said bent edge being substantially arranged perpendicularly to the plate body 2 and ending at the end portions thereof with a plurality of tooth elements 4, which are bent substantially perpendicular to the edge 3.

The tooth elements 4 can be engaged with the hook elements 10 defined in the central channel body 11 formed in the harness channel 12, of a plastic material.

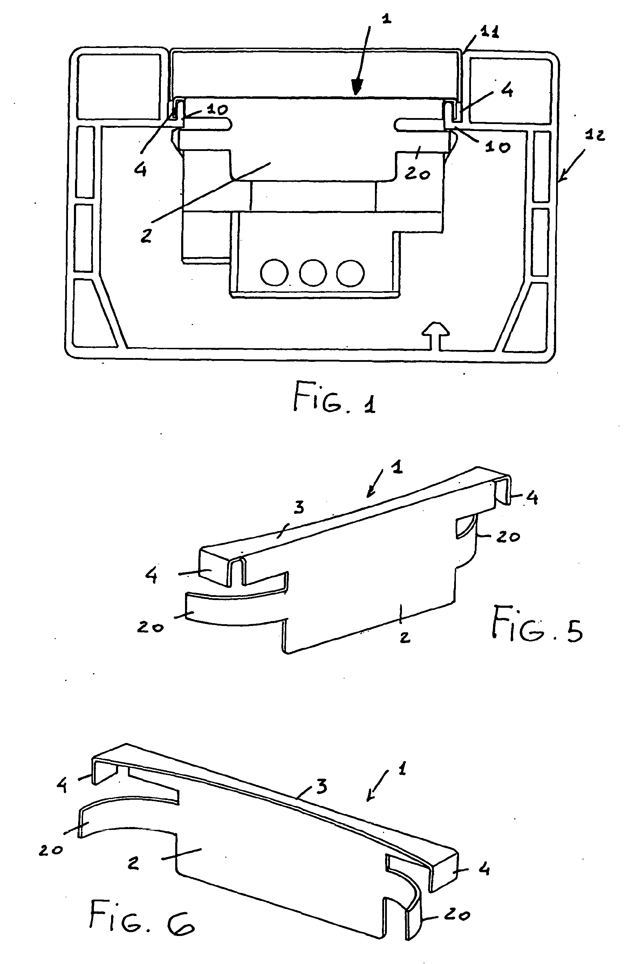

More specifically, the tooth elements 11, as is clearly shown in figure 1, engage with the hook elements, thereby practically providing a tie-rod, preventing the hook elements from being spread apart.

As shown, from the plate body 2 extend a plurality of abutment fins 20, which are so curved as to practically provide a spring; said fins being adapted to be arranged under the hook elements 10, for preventing the holding element from being accidentally withdrawn or disengaged.

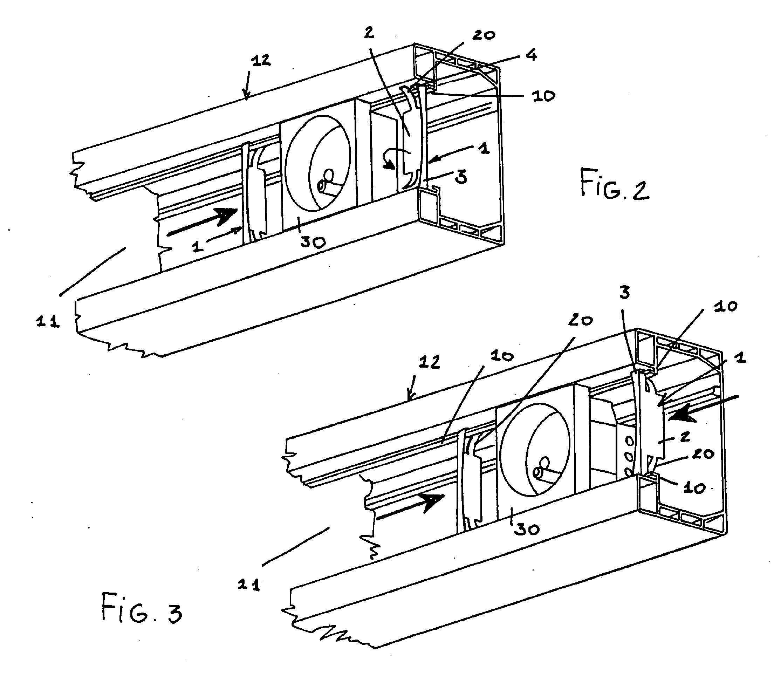

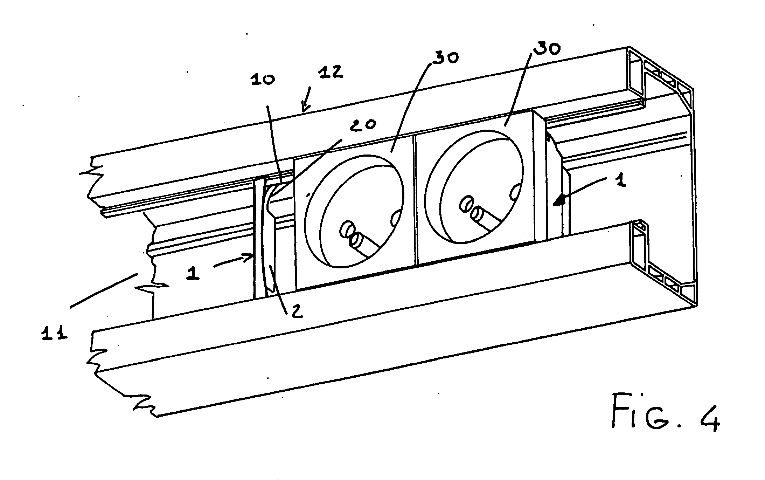

For assembling the holding element, as is schematically shown in figures 2 to 4, the plate body 2 is arranged, at the start of the assembly operation, on the hook elements, and, more specifically, it is arranged in a substantially parallel relationship with the bottom of the harness channel.

Then, a rotary movement through 90° is performed, so as to cause the abutment fins 20 to pass the hook elements so as to be arranged under said hook elements 10.

Then, the holding elements are caused to slide against the walls of the electric "fruit", just under the latter, by slightly raising it.

Then, the holding elements will be arranged with a greatly compact arrangement.

Thus, it will be possible to arrange adjoining with one another a plurality of electric fruits, without generating dead spaces therebetween.

For performing a disassembling operation, the above mentioned operations will be performed in a reversed order.

Then, the electric fruit can be easily withdrawn.

From the above disclosure it should be apparent that the invention fully achieves the intended aim and objects.

In particular, the invention provides a holding element adapted to prevent electric consumer apparatus from being disengaged from their harness channels, the holding element having a very small cost and being adapted to be quickly and simply assembled and disassembled, in a very safe manner.

Actually, since the subject holding element practically operates as a tie-rod between opposite hook elements, defined on the central channel body of the harness channel, it will prevent any spreading apart from occurring, even under great efforts, thereby firmly holding in their set positions all the electric fluids.

In practicing the invention, the used materials, provided that they are compatible to the intended application, as well as the contingent size and shapes, can be any, according to requirements.

## Claims

1. A metal holding element (1) to be arranged in a harness channel (11) for preventing an electric consumer apparatus from being disengaged from said harness channels (11), said holding element comprises a substantially flat plate body (2) made of a sheet metal material for engagement on a side of said electric consumer apparatus, said plate body having a top longitudinal bent flat edge (3) having two end portions each of which is downward bent at an angle of substantially 90° with respect to said longitudinal bent flat edge (3) to define each a respective substantially rectangular flat tooth element (4) engageable with a corresponding hook element (10) defined by said harness channel (11) for latching said electric consumer apparatus, said plate body (2) further comprising, under each of said tooth (4), a respective curved resilient abutment fin (20) resiliently engageable under said hook element (11) of said channel for preventing said holding element (1) from being accidentally removed from said channel (11).

2. A holding element, according claim 1, **characterized in that** said longitudinal bent flat edge (3) is integral with said plate body (2) and is bent at an angle of substantially 90° inward of said plate body (2) as assembled in said channel (11).

3. A holding element (1), according to claim 1, **characterized in that** said holding element (1) is so designed as to slide in said channel (11), thereby a plurality of said holding elements (1) can be engaged with a respective said electric consumer apparatus to prevent each said apparatus from being accidentally removed from said channel (11) while arranging a plurality of said electric apparatus in said channel (11) without dead spaces therebetween.

4. A holding element, according to claim 1, **characterized in that** said plate body (2) is so designed and sized to be arranged on said hook elements (10) of said channel (11) and turned through substantially 90° to arrange said resilient fins (20) under said hook elements (10) of said channel (11).

5. A holding element, according to claim 1, **characterized in that** said holding element (1) is made of a stainless steel material.

## Patentansprüche

1. Metallhalteelement (1) zum Anordnen in einem Kabelkanal (11) zur Vermeidung des Herausspringens eines elektrischen Konsumgeräts aus den Kabelkanälen (11), wobei das Halteelement einen im Wesentlichen flachen Plattenkörper (2) aus Blech zum Eingriff auf einer Seite des elektrischen Konsumgeräts umfasst, wobei der Plattenkörper eine längs verlaufende, gebogene, flache Oberkante (3) mit zwei Endabschnitten aufweist, der jeder in einem Winkel von ungefähr 90° bezüglich der längs verlaufenden, gebogenen, flachen Kante (3) nach unten gebogen ist, um jeder ein jeweiliges, im Wesentlichen rechteckiges, flaches Zahnelement (4) zu definieren, das mit einem entsprechenden Hakenelement (10), das durch den Kabelkanal (11) definiert ist, zum Einklinken des elektrischen Konsumgeräts in Eingriff bringbar ist, wobei der Plattenkörper (2) unter jedem der Zähne (4) ferner einen jeweiligen gekrümmten, elastischen Angrenzsteg (20) umfasst, der unter dem Hakenelement (10) des Kanals elastisch in Eingriff bringbar ist, um zu vermeiden, dass das Halteelement (1) versehentlich aus dem Kanal (11) entfernt wird.

2. Halteelement nach Anspruch 1, **dadurch gekennzeichnet, dass** die längs verlaufende, gebogene, flache Kante (3) mit dem Plattenkörper (2) einstückig ist und in einem Winkel von im Wesentlichen 90° einwärts von dem Plattenkörper (2) gebogen ist, wenn er in dem Kanal (11) montiert ist.

3. Halteelement (1) nach Anspruch 1, **dadurch gekennzeichnet, dass** das Halteelement (1) derart gestaltet ist, dass es in dem Kanal (11) gleitet, wodurch mehrere der Halteelemente (1) mit einem jeweiligen der elektrischen Konsumgeräte in Eingriff gebracht sein können, um zu vermeiden, dass jedes der Geräte versehentlich aus dem Kanal (11) entfernt wird, während mehrere der elektrischen Geräte ohne tote Räume dazwischen in dem Kanal (11) angeordnet sind.

4. Halteelement nach Anspruch 1, **dadurch gekennzeichnet, dass** der Plattenkörper (2) zu seiner Anordnung auf den Hakenelementen (10) des Kanals (11) und Drehung um im Wesentlichen 90° zum Anordnen der elastischen Stege (20) unter den Hakenelementen (10) des Kanals (11) gestaltet und bemessen ist.

5. Halteelement nach Anspruch 1, **dadurch gekennzeichnet, dass** das Halteelement (1) aus einem Edelstahlmaterial hergestellt ist.

## Revendications

1. Elément de maintien métallique (1) devant être agencé dans un chemin de câble (11) afin de prévenir le découplage d'un appareil de consommation électrique desdits chemins de câble (11), ledit élément de maintien métallique comprenant un corps-plaque sensiblement plat (2) constitué d'une tôle permettant le couplage sur un côté dudit appareil de consommation électrique, ledit corps-plaque ayant un bord plat incurvé longitudinal supérieur (3) ayant deux portions d'extrémité dont chacune est incurvée vers le bas suivant un angle de sensiblement 90° par rapport au dit bord plat incurvé longitudinal supérieur (3) afin de définir chacune un élément de dent plat sensiblement rectangulaire respectif (4) pouvant être couplé avec un élément de crochet (10) correspondant défini par ledit chemin de câble (11) afin de bloquer ledit appareil de consommation électrique, ledit corps-plaque (2) comprenant en outre, sous chacune desdites dents (4), une ailette de butée élastique courbe respective (20), pouvant s'accoupler élastiquement sous ledit élément de crochet (10) dudit chemin pour prévenir l'enlèvement accidentel dudit élément de maintien (1) dudit chemin de câble (11).

2. Elément de maintien selon la revendication 1, **caractérisé en ce que** ledit bord plat incurvé longitudinal (3) est réalisé en une seule pièce avec ledit corps-plaque (2) et est incurvé suivant un angle de sensiblement 90° vers l'intérieur dudit corps-plaque (2) tel qu'assemblé dans ledit chemin de câble (11).

3. Elément de maintien (1) selon la revendication 1, **caractérisé en ce que** ledit élément de maintien (1) est conçu de manière à coulisser dans ledit chemin de câble (11), et ainsi une pluralité de dits éléments de maintien (1) peut s'accoupler avec un dit appareil de consommation électrique respectif afin de prévenir l'enlèvement accidentel de chaque dit appareil dudit chemin de câble (11) tout en agençant une pluralité de dits appareils électriques dans ledit chemin de câble (11) sans espace mort entre ceux-ci.

4. Elément de maintien selon la revendication 1, **caractérisé en ce que** ledit corps-plaque (2) est conçu et dimensionné de manière à être agencé sur lesdits éléments de crochet (10) dudit chemin de câble (11) et tourné sur sensiblement 90° pour agencer lesdites ailettes élastiques (20) sous lesdits éléments de crochet (10) dudit chemin de câble (11).

5. Elément de maintien selon la revendication 1, **caractérisé en ce que** ledit élément de maintien (1) est constitué d'acier inoxydable.
